# EUROPEAN PATENT APPLICATION

(11) **EP 4 700 919 A2**
(43) Date of publication of application: **25.02.2026**
(21) Application number: 25224560.0
(22) Date of filing: 05.10.2021
(51) Int. Cl.: H01M 10/658

(54) **BATTERY MODULE, AND BATTERY PACK AND VEHICLE THAT INCLUDE SAME**

(30) Priority: 06.10.2020 KR 20200129000
(62) Divisional of application: 21877961.9
(71) Applicant: LG Energy Solution, Ltd., Seoul 07335 (KR)
(72) Inventor: KIM, Yong-Il, 34122 Daejeon (KR); KIM, Dong-Wook, 34122 Daejeon (KR); LEE, Su-Hang, 34122 Daejeon (KR)
(74) Representative: Goddar, Heinz J.

(57) **Abstract**

A battery module according to an embodiment of the present disclosure includes a plurality of battery cells, a module case in which the plurality of battery cells are accommodated, a thermal resin provided inside the module case, and configured to cool the plurality of battery cells, and buffer spaces facing each other with the thermal resin therebetween, and provided inside the module case.

## Description

### TECHNICAL FIELD

The present disclosure relates to a battery module, and a battery pack and a vehicle including the same.

The present application claims priority to Korean Patent Application No. 10-2020-0129000 filed on October 6, 2020 in the Republic of Korea, the disclosures of which are incorporated herein by reference.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage or charge/discharge capacity.

When a battery pack is configured by connecting a plurality of battery cells in series/parallel, a method of first configuring a battery module including at least one battery cell and adding other elements by using the at least one battery module to configure a battery pack is general.

In general, a conventional battery module includes a plurality of battery cells, a module case in which the plurality of battery cells are accommodated, and a thermal resin provided on a bottom surface of the module case and configured to cool the plurality of battery cells.

In the conventional battery module, a swelling phenomenon where battery cells swell due to a chemical reaction in the battery cells inevitably occurs during repeated charge/discharge cycles.

When swelling of the battery cells occurs, due to an arrangement structure in which the battery cells are stacked inside the module case, battery cells on outermost sides inside the module case may be pushed from initial positions to outer positions due to swelling of battery cells on inner sides inside the module case.

In contrast, the thermal resin provided on lower end portions of the battery cells is arranged to hold all of the lower end portions of the battery cells. Accordingly, in the conventional battery module, when swelling of the battery cells occurs, because battery cells on both outermost sides are pushed outward in left and right directions while lower end portions of the battery cells are fixed by the thermal resin, a large tensile force is applied to a pouch case of the battery cells on both outermost sides, thereby increasing the risk of damage such as tearing.

When the pouch case of the battery cells is torn, an electrolytic solution inside the pouch case may leak, thereby degrading insulating performance and greatly degrading battery performance.

Hence, there is a demand for a battery module capable of preventing damage to battery cells when swelling occurs in the battery cells inside a module case, and a battery pack and a vehicle including the battery module.

### DISCLOSURE

### TECHNICAL PROBLEM

Accordingly, an objective of the present disclosure is to provide a battery module capable of preventing damage to battery cells when swelling occurs in the battery cells inside a module case, and a battery pack and a vehicle including the battery module.

### TECHNICAL SOLUTION

In an aspect of the present disclosure, there is provided a battery module including: a plurality of battery cells; a module case in which the plurality of battery cells are accommodated; a thermal resin provided inside the module case, and configured to cool the plurality of battery cells; and buffer spaces facing each other with the thermal resin therebetween, and provided inside the module case.

The thermal resin may be located under the plurality of battery cells, and the buffer spaces may be located under outermost battery cells from among the plurality of battery cells inside the module case.

The battery module may further include buffer pads provided on both inner walls of the module case, and contacting outermost battery cells from among the plurality of battery cells.

The buffer spaces may be provided between lower end portions of the buffer pads and an inner bottom surface of the module case.

The thermal resin may be applied to an inner bottom surface of the module case when the battery module is manufactured.

The thermal resin may be injected into the module case through an injection unit from outside of the module case when the battery module is manufactured.

The buffer spaces may include resin stoppers for preventing introduction of the thermal resin when the thermal resin is injected through the injection unit.

The buffer spaces may be filled with air.

In another aspect of the present disclosure, there is also provided a battery pack including: at least one battery module according to the above embodiments; and a pack case for packaging the at least one battery module.

In another aspect of the present disclosure, there is also provided a vehicle including at least one battery pack according to the above embodiment.

### ADVANTAGEOUS EFFECTS

According to the above various embodiments, a battery module capable of preventing damage to battery cells during swelling of the battery cells inside a module case, and a battery pack and a vehicle including the battery module may be provided.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a battery module, according to an embodiment of the present disclosure.
FIG. 2 is an enlarged view illustrating main elements of the battery module of FIG. 1.
FIG. 3 is a view for describing application of a thermal resin to the battery module of FIG. 1.
FIGS. 4 and 5 are views for describing a tearing preventing mechanism of battery cells through buffer spaces during swelling of the battery cells of the battery module of FIG. 1.
FIG. 6 is a view for describing a battery module, according to another embodiment of the present disclosure.
FIG. 7 is an enlarged view illustrating main elements of the battery module of FIG. 6.
FIG. 8 is a view for describing injection of a thermal resin to the battery module of FIG. 6.
FIGS. 9 and 10 are views for describing a tearing preventing mechanism of battery cells through buffer spaces during swelling of the battery cells of the battery module of FIG. 6.
FIG. 11 is a view for describing a battery pack, according to an embodiment of the present disclosure.
FIG. 12 is a view for describing a vehicle, according to an embodiment of the present disclosure.

### EXAMPLES FOR CARRYING OUT THE INVENTION

The present disclosure will now be described more fully with reference to the accompanying drawings, in which exemplary embodiments of the present disclosure are shown. These embodiments are provided so that the present disclosure will be thorough and complete, and will fully convey the concept of the present disclosure to one of ordinary skill in the art, and the present disclosure may be embodied in many different forms and should not be construed as being limited to the embodiments set forth herein. In addition, in order to help the understanding of the present disclosure, the accompanying drawings are not drawn to scale, but dimensions of some components may be exaggerated.

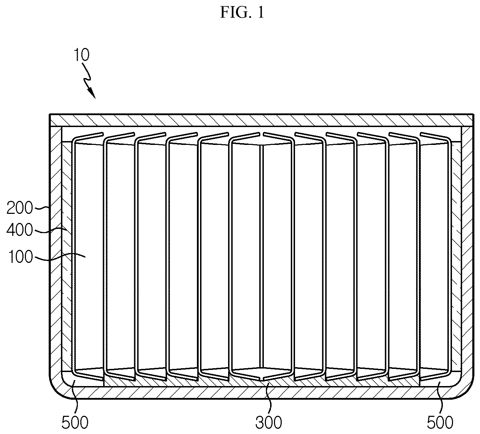

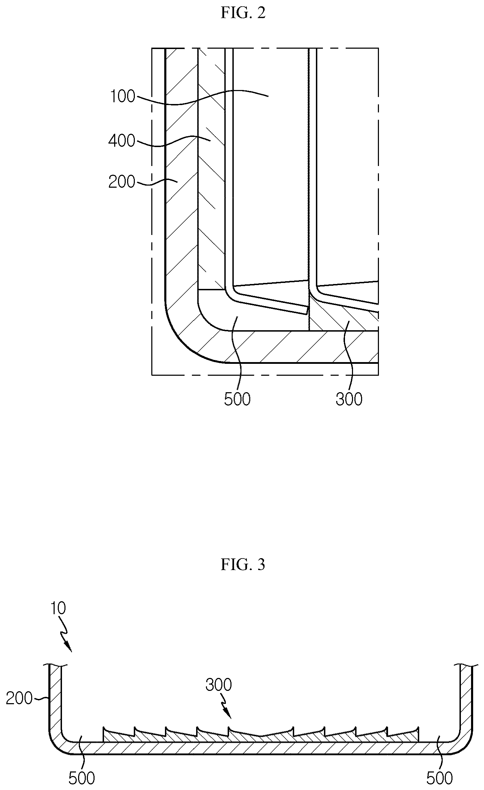

FIG. 1 is a view for describing a battery module, according to an embodiment of the present disclosure. FIG. 2 is an enlarged view illustrating main elements of the battery module of FIG. 1.

Referring to FIGS. 1 and 2, a battery module 10 may include a battery cell 100, a module case 200, a thermal resin 300, and buffer spaces 500.

The battery cell 100 that is a secondary battery may be a pouch-type secondary battery, a prismatic secondary battery, or a cylindrical secondary battery. The present embodiment will be described assuming that the battery cell 100 is a pouch-type secondary battery.

When the battery cell 100 is a pouch-type secondary battery, the battery cell 100 may include an electrode assembly, a pair of electrode leads electrically connected to the electrode assembly, and a pouch case in which the electrode assembly is accommodated. An electrolytic solution may be filled in the pouch case.

At least one or more battery cells 100 may be provided. The present embodiment will be described assuming that a plurality of battery cells 100 are provided and are stacked to be electrically connected to one another.

The module case 200 may accommodate therein the plurality of battery cells 100. To this end, a receiving space in which the plurality of battery cells 100 may be accommodated may be provided in the module case 200.

The thermal resin 300 for cooling the plurality of battery cells 100 may be provided inside the module case 200. In detail, the thermal resin 300 may be located under the plurality of battery cells 100 and may be provided on an inner bottom surface of the module case 200.

FIG. 3 is a view for describing application of a thermal resin to the battery module of FIG. 1.

Referring to FIG. 3, the thermal resin 300 may be applied to an inner bottom surface of the module case 200, when the battery module 10 is manufactured. In this case, the thermal resin 300 may not be applied near both edges of the inner bottom surface of the module case 200, in order to form the buffer spaces 500 described below.

Referring back to FIG. 1, the battery module 10 may include buffer pads 400.

The buffer pads 400 may be provided on both inner walls of the module case 200, and may contact side surfaces of outermost battery cells 100 from among the plurality of battery cells 100.

The pair of buffer pads 400 may absorb or buffer impact transmitted to the plurality of battery cells 100 from external impact or the like.

The buffer spaces 500 may face each other with the thermal resin 300 therebetween, and may be provided inside the module case 200. In detail, the buffer spaces 500 may be located under the outermost battery cells 100 from among the plurality of battery cells 100 inside the module case 200.

The buffer spaces 500 may be provided between lower end portions of the buffer pads 400 and the inner bottom surface of the module case 200. The buffer spaces 500 may be filled with air.

A tearing preventing mechanism of the battery cell 100 through the buffer spaces 500 during swelling of the battery cells 100 of the battery module 10 according to the present embodiment will be described in more detail.

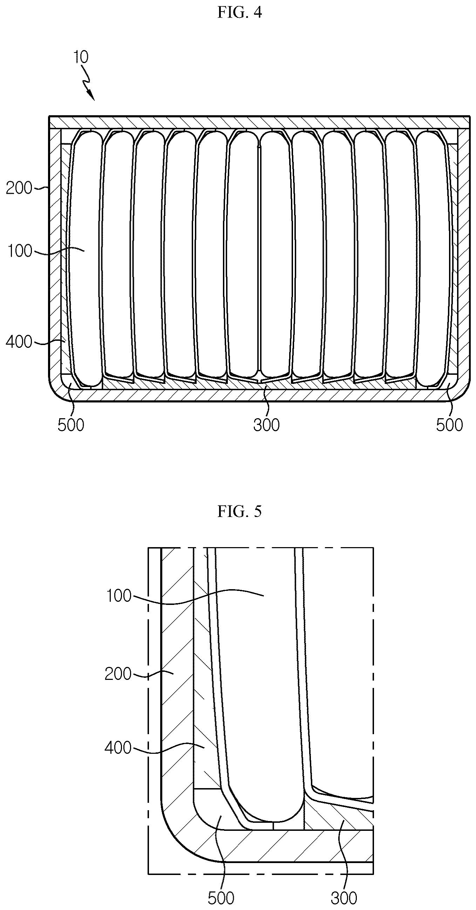

FIGS. 4 and 5 are views for describing a tearing preventing mechanism of battery cells through buffer spaces during swelling of the battery cells of the battery module of FIG. 1.

Referring to FIGS. 4 and 5, in the case of the battery module 10, when swelling of the battery cells 100 occurs, due to an arrangement structure in which the battery cells 100 are stacked inside the module case 200, the battery cells 100 on both outermost sides inside the module case 200 may be pushed from initial positions to outer positions due to swelling of the battery cells 100 on inner sides inside the module case 200.

In other words, in the battery module 10, when swelling of the battery cells 100 occurs, the battery cells 100 on both outermost sides from among the battery cells 100 undergo the greatest deformation. Lower end portions of the battery cells 100 on both outermost sides from among the battery cells 100 have the greatest elongation.

In the present embodiment, because the buffer spaces 500 are formed under the battery cells 100 on both outermost sides from among the battery cells 100, a tensile force applied to the lower end portions of the battery cells 100 on both outermost sides which have the greatest elongation may be reduced through the buffer spaces 500.

Accordingly, in the battery module 10 according to the present embodiment, through the buffer spaces 500, during swelling, a tensile force applied to the lower end portions of the battery cells 100 on both outermost sides which have the greatest elongation may be reduced, and, thus, damage such as tearing of a pouch case of the battery cells 100 on both outermost sides may be effectively prevented.

In the present embodiment, through the buffer spaces 500, an outer volume of the module case 200, that is, dimensions of the module case 200, may be maintained, and a tensile force of the battery cells 100 may be significantly reduced without using an additional component for preventing damage.

Accordingly, in the present embodiment, because risk such as crack or damage to the battery cells 100 due to swelling of the battery cells 100 may be effectively prevented with a simpler and efficient structure, price competitiveness may be ensured in terms of manufacturing costs of the battery module 10.

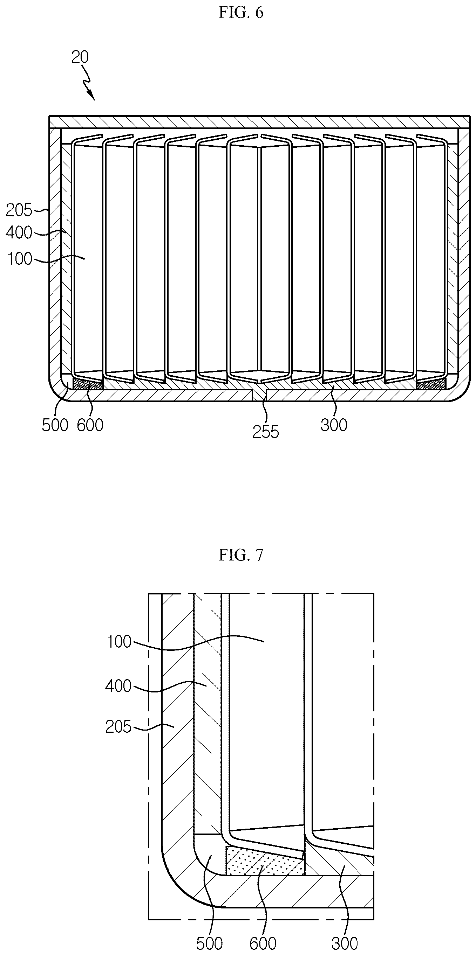

FIG. 6 is a view for describing a battery module, according to another embodiment of the present disclosure. FIG. 7 is an enlarged view illustrating main elements of the battery module of FIG. 6.

A battery module 20 according to the present embodiment is similar to the battery module 10 of the above embodiment, thus, a repeated description of elements which substantially the same as or similar to those in the above embodiment will be omitted and a difference from the above embodiment will be mainly described.

Referring to FIGS. 6 and 7, the battery module 20 may include the battery cell 100, a module case 205, the thermal resin 300, the buffer pads 400, the buffer spaces 500, and resin stoppers 600.

A plurality of battery cells 100 may be provided. The plurality of battery cells 100 are substantially the same as or similar to those of the above embodiment, and thus, a repeated description will be omitted.

The module case 205 may include a resin injection hole 255.

The resin injection hole 255 through which the thermal resin 300 is injected may be formed in a bottom surface of the module case 205. The thermal resin 300 may be injected into the bottom surface of the module case 205, through the resin injection hole 255.

A process of injecting the thermal resin 300 into the battery module 20 will be described in more detail.

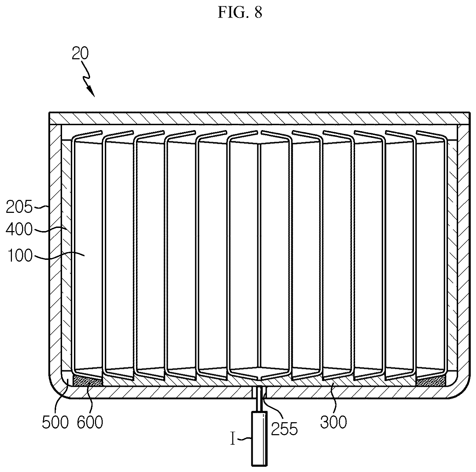

FIG. 8 is a view for describing injection of a thermal resin into the battery module of FIG. 6.

Referring to FIG. 8, the thermal resin 300 may be injected into the module case 200 through an injection unit I from the outside of the module case 205 when the battery module 20 is manufactured.

In detail, the injection unit I may be inserted into the resin injection hole 255 of the module case 205 to inject the thermal resin 300 into the bottom surface of the module case 200. In this case, the introduction of the thermal resin 300 may be blocked through the resin stoppers 600 described below in the buffer spaces 500.

The injection of the thermal resin 300 by the injection unit I may be performed until an inner space of the resin injection hole 255 is filled. A separate cab cover or the like for sealing the inside may be mounted in the injection hole 255, instead of filling the thermal resin 300 in the resin injection hole 255.

Referring back to FIGS. 6 and 7, the buffer pads 400 are substantially the same as or similar to those of the above embodiment, and thus, a repeated description thereof will be omitted.

The resin stoppers 600 may be provided in the buffer spaces 500.

The resin stoppers 600 may be provided in the buffer spaces 500 to prevent the introduction of the thermal resin 300 to the buffer spaces 500 when the thermal resin 300 is injected by the injection unit I.

The resin stoppers 600 may be formed of an elastic material. For example, the resin stoppers 600 may be formed of a rubber material. The resin stoppers 600 may be formed of a plastic material having elasticity.

A tearing preventing mechanism of the battery cells 100 through the buffer spaces 500 and the resin stoppers 600 during swelling of the battery cells 100 of the battery module 20 according to the present embodiment will be described in more detail.

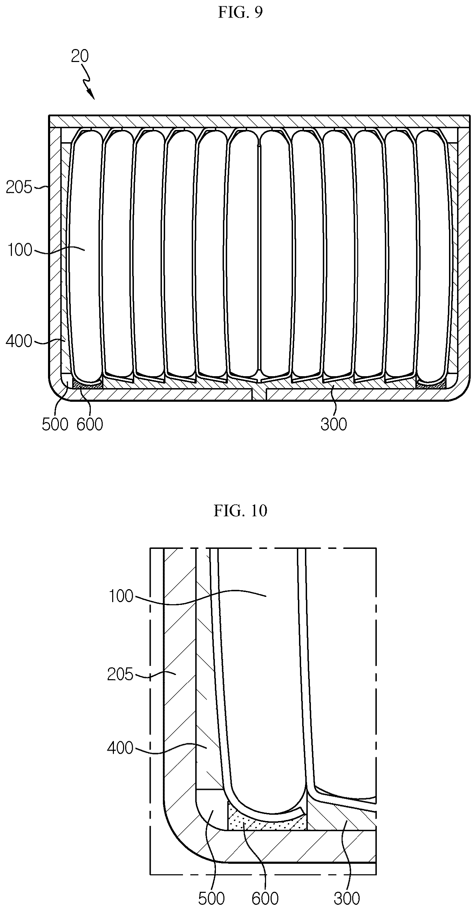

FIGS. 9 and 10 are views for describing a tearing preventing mechanism of battery cells through buffer spaces during swelling of the battery cells of the battery module of FIG. 6.

Referring to FIGS. 9 and 10, in the battery module 10, when swelling of the battery cells 100 occurs, as in the above embodiment, through the buffer spaces 500, a tensile force applied to the battery cells 100 on both outermost sides may be effectively reduced.

Also, in the present embodiment, through the resin stoppers 600, a tensile force applied to the battery cells 100 may be additionally absorbed, and thus, damage such as tearing or crack of a pouch case of the battery cells 100 may be more effectively prevented.

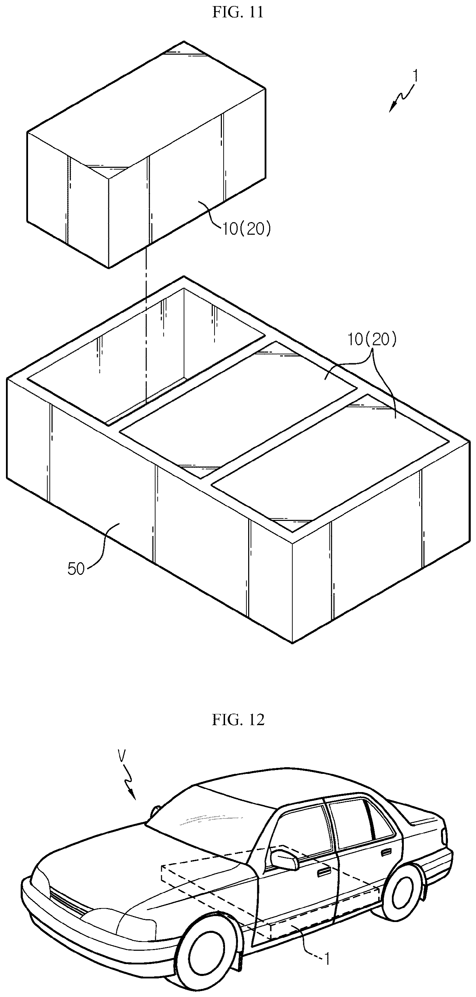

FIG. 11 is a view for describing a battery pack, according to an embodiment of the present disclosure. FIG. 12 is a view for describing a vehicle, according to an embodiment of the present disclosure.

Referring to FIGS. 11 and 12, a battery pack 1 may include at least one battery module 10, 20 according to the above embodiment and a pack case 50 for packaging the at least one battery module 10, 20.

The battery pack 1 may be provided in a vehicle V as a fuel source of the vehicle. For example, the battery pack 1 may be provided in the vehicle V such as an electric vehicle, a hybrid vehicle, or another type of vehicle which may use other battery pack 1 as a fuel source.

Also, the battery pack 1 may be provided in another device, mechanism, or equipment such as an energy storage system using a secondary battery, in addition to the vehicle V.

As such, because the battery pack 1 and the device, mechanism, or equipment including the battery pack 1 such as the vehicle V according to the present embodiment include the battery module 10, 20, the battery pack 1 and the device, mechanism, or equipment including the battery pack 1 such as the vehicle V having all of the advantages of the battery module 10, 20 may be implemented.

According to the above various embodiments, the battery module 10, 20 capable of preventing damage such as tearing of the battery cells 100 during swelling of the battery cells 100 inside the module case 200, 205 and the battery pack 1 and the vehicle V including the battery module 10, 20 may be provided.

While the preferred embodiments of the present disclosure have been shown and described, the present disclosure is not limited to the specific embodiments described above, various modifications may be made by one of ordinary skill in the art to which the present disclosure pertains without departing from the gist of the present disclosure as defined by the claims, and these modifications should not be individually understood from the technical feature or prospect of the present disclosure.

In view of the above disclosure, the present invention may be implemented according to the following itemized embodiment examples.
ITEM 1. A battery module comprising:
   a plurality of battery cells;
   a module case in which the plurality of battery cells are accommodated;
   a thermal resin provided inside the module case, and configured to cool the plurality of battery cells; and
   buffer spaces facing each other with the thermal resin therebetween, and provided inside the module case.
ITEM 2. The battery module of ITEM 1, wherein the thermal resin is located under the plurality of battery cells, and the buffer spaces are located under outermost battery cells from among the plurality of battery cells inside the module case.
ITEM 3. The battery module of ITEM 1, further comprising buffer pads provided on both inner walls of the module case, and contacting outermost battery cells from among the plurality of battery cells.
ITEM 4. The battery module of ITEM 3, wherein the buffer spaces are provided between lower end portions of the buffer pads and an inner bottom surface of the module case.
ITEM 5. The battery module of ITEM 1, wherein the thermal resin is applied to an inner bottom surface of the module case when the battery module is manufactured.
ITEM 6. The battery module of ITEM 1, wherein the thermal resin is injected into the module case through an injection unit from outside of the module case when the battery module is manufactured.
ITEM 7. The battery module of ITEM 6, wherein the buffer spaces comprise resin stoppers for preventing introduction of the thermal resin when the thermal resin is injected through the injection unit.
ITEM 8. The battery module of ITEM 1, wherein the buffer spaces are filled with air.
ITEM 9. A battery pack comprising:
   at least one battery module according to ITEM 1; and
   a pack case for packaging the at least one battery module.
ITEM 10. A vehicle comprising at least one battery pack according to ITEM 9.

## Claims

1. A battery module (10; 20) comprising:
a plurality of battery cells (100);
a module case (200; 205) in which the plurality of battery cells (100) are accommodated;
a thermal resin (300) provided inside the module case (200; 205), and configured to cool the plurality of battery cells (100); and
buffer spaces (500) facing each other with the thermal resin (300) therebetween, and provided inside the module case (200; 205),
wherein resin stoppers (600) are provided in the buffer spaces (500).

2. The battery module of claim 1, wherein the thermal resin (300) is located under the plurality of battery cells (100), and the buffer spaces (500) are located under outermost battery cells (100) from among the plurality of battery cells inside the module case (200; 205).

3. The battery module of one of claim 1, wherein the thermal resin (300) is not applied near both edges of the inner bottom surface of the module case (200), in order to form the buffer spaces (500).

4. The battery module of claim 1, wherein the resin stoppers (600) comprise an elastic material.

5. The battery module of claim 1, wherein the resin stoppers (600) comprise a plastic material having elasticity.

6. The battery module (10; 20) of claim 1, further comprising buffer pads (400) provided on both inner walls of the module case (200; 205), and contacting outermost battery cells (100) from among the plurality of battery cells (100).

7. The battery module (10; 20) of claim 6, wherein the buffer spaces (500) are provided between lower end portions of the buffer pads (400) and an inner bottom surface of the module case (200; 205).

8. The battery module (10; 20) of claim 6 or 7, wherein the buffer pads (400) are configured to absorb or buffer impact transmitted to the plurality of battery cells (100) from external impact.

9. The battery module (10; 20) of claim 1, wherein the thermal resin (300) is applied to an inner bottom surface of the module case (200; 205) when the battery module is manufactured.

10. The battery module (10; 20) of claim 1, wherein the thermal resin (300) is injected into the module case (200; 205) through an injection unit from outside of the module case (200; 205) when the battery module is manufactured.

11. The battery module (10; 20) of claim 10, wherein the buffer spaces (500) comprise the resin stoppers (600) for preventing introduction of the thermal resin (300) when the thermal resin (300) is injected through the injection unit.

12. The battery module (10; 20) of claim 1, wherein the battery cells (100) are pouch-type secondary batteries.

13. The battery module (10; 20) of claim 12, wherein each pouch-type secondary battery includes an electrode assembly, a pair of electrode leads electrically connected to the electrode assembly, and a pouch case in which the electrode assembly is accommodated.

14. The battery module (10; 20) of claim 1, wherein the battery cells (100) are stacked inside the module case (200; 205).

15. The battery module (10; 20) of claim 14, wherein the plurality of battery cells (100) are provided and are stacked to be electrically connected to one another.

16. A battery pack (1) comprising:
at least one battery module (10; 20) according to claim 1; and
a pack case (50) for packaging the at least one battery module (10; 20).

17. A vehicle (V) comprising at least one battery pack (1) according to claim 16.
